Europäisches Patentamt

**European Patent Office**

Office européen des brevets

(11) Veröffentlichungsnummer: **0 085 300**

A2

(12) # EUROPÄISCHE PATENTANMELDUNG

(21) Anmeldenummer: 83100096.3

(22) Anmeldetag: 07.01.83

(51) Int. Cl.³: **B 62 D 55/28**
B 62 D 55/20

(30) Priorität: 01.02.82 US 344670

(43) Veröffentlichungstag der Anmeldung:
10.08.83 Patentblatt 83/32

(84) Benannte Vertragsstaaten:
DE FR GB IT

(71) Anmelder: DEERE & COMPANY
1 John Deere Road
Moline Illinois 61265(US)

(72) Erfinder: Wohlford, William Paul
5102 Crow Creek Road
Bettendorf Iowa 52722(US)

(72) Erfinder: Beitel, Howard Virginius
2529 31st Avenue Court
Moline Illinois 61265(US)

(74) Vertreter: Gramm, Werner, Prof. Dipl.-Ing. et al,
Patentanwälte Gramm + Lins Theodor-Heuss-Strasse 2
D-3300 Braunschweig(DE)

(54) Gleiskettenabschnitt einer endlosen Gleiskette für ein Kettenfahrzeug.

(57) Offenbart sind zwei verschiedene Gleiskettenabschnitte
(26; 60) mit jeweils einem Raupenglied (30; 62), die entweder
durch Schwenkbolzen (41) oder durch biegeelastische
Biegeelemente (78, 80) miteinander verbunden sind. Beide
Ausführungsformen weisen jeweils ein von den Zähnen (64)
eines Kettenrades (20) beaufschlagtes Kettenrad-Eingriffsteil
(36; 70) sowie einen Zahnlücken-Reinigungssteg (22; 50; 74)
auf, der in die Zahnlücken (56) dieses Kettenrades eintaucht
und angeschärfte bzw. keilförmig ausgebildete Rippen (44,
46; 52; 76) aufweist, die Verunreinigungen aus den Zahnlücken (56) verdrängen. Die Kettenrad-Eingriffsteile (36; 70)
zweier benachbarter Gleiskettenabschnitte (26; 60) weisen
voneinander einen zumindest der doppelten Zahnteilung des
Kettenrades (20) entsprechenden Abstand auf, wobei zwischen jeweils zwei benachbarten Kettenrad-Eingriffsteilen
(36; 70) eine freie Zahnlücke (56) verbleibt, in die der
Zahnlücken-Reinigungssteg (42; 50; 74) eintaucht.

FIG. 7

# Patentanwälte GRAMM + LINS

Dipl.-Ing. Prof. Werner Gramm
Dipl.-Phys. Edgar Lins

**0085300**
D-3300 Braunschweig

DEERE & COMPANY

Moline, Illinois 61265

U S A

Telefon:  (05 31) 8 00 79
Telex:    09 52 620

Anwaltsakte  324-54 EP-1
Datum        5.Jan.1983

"Gleiskettenabschnitt einer endlosen Gleiskette für ein Kettenfahrzeug"

Die Erfindung betrifft einen Gleiskettenabschnitt einer endlosen
Gleiskette für ein Kettenfahrzeug, mit einem Raupenglied, das
- in Draufsicht bei Lage im Untertrum - eine rechte und im seitlichen Abstand hiervon eine linke Lasche aufweist, deren ersten
Enden über ein Kettenrad-Eingriffsteil verbunden sind, das in
seiner nach oben weisenden Fläche zylindrisch ausgebildet ist
und zum Eingriff in Zahnlücken bestimmt ist, die zwischen benachbarten Zähnen eines Kettenrades angeordnet und zumindest
teilweise von diesen Zähnen gebildet sind.

Hinsichtlich des einschlägigen Standes der Technik kann auf die
US-Patentschriften 2,823,080 , 3,567,294 und 3,948,573 verwiesen
werden.

Es ist allgemein bekannt, daß beim Fahren durch nasses Erdreich, Schnee o.dergl. sich diese Verunreinigungen in den Zahnlücken der Kettenräder des Kettenfahrzeuges festsetzen und sich
unter Verdichtung so weit aufbauen, daß sich das Zahnteilungsverhältnis zwischen Kettenrad und Kette verändert. Hierdurch
gelangt die Kette nicht mehr in exakten Eingriff mit dem Kettenrad, was zu erhöhtem Verschleiß an der Kette und dem Kettenrad
führt.

Zur Behebung dieses Nachteils wurden bisher Entlastungsnuten in den Zahnlücken vorgesehen. In der Praxis hat sich diese Lösung jedoch nicht als sehr erfolgreich erwiesen; außerdem führt diese Lösung zu einer Verringerung der Anlagefläche zwischen Kettenrad-Eingriffsteil und Kettenrad und dadurch zu einer erhöhten Flächenbelastung, die wiederum einen erhöhten Verschleiß verursacht.

Die Erfindung geht aus von einer üblichen Gleiskette mit doppelter Zahnteilung in Verbindung mit einem eine ungerade Zähnezahl aufweisenden Kettenrad. Hiervon ausgehend liegt der Erfindung die Aufgabe zugrunde, den Gleiskettenabschnitt einer derartigen Gleiskette so zu verbessern, daß der Aufbau von Verunreinigungen in den Zahnlücken des Kettenrades weitgehend unterbunden wird.

Diese Aufgabe wird gemäß der Erfindung dadurch gelöst, daß die Laschen ferner über einen Zahnlücken-Reinigungssteg miteinander verbunden sind, der parallel zum Kettenrad-Eingriffsteil und von diesem in einem der Zahnteilung des Kettenrades entsprechenden Abstand angeordnet ist und zumindest eine nach oben ragende und sich nach oben verjüngende Rippe aufweist, die so ausgelegt ist, daß sie bei Beaufschlagung des Raupengliedes durch das Kettenrad deren Zahnlückenfläche dicht überstreicht.

In Anpassung an das für die Gleiskette zu verwendende Kettenrad wird also der Abstand zwischen Kettenrad-Eingriffsteil und Zahnlücken-Reinigungssteg so gewählt, daß diese beiden Teile in benachbarte Zahnlücken des Kettenrades eintauchen. Die auf dem Reinigungssteg sitzende Rippe streicht dicht am Kerndurchmesser des Kettenrades vorbei und beaufschlagt dabei das sich in dieser Zahnlücke zuvor ggf. festgesetzte Material und schiebt dieses Material nach außen.

Der Zahnlücken-Reinigungssteg kann auch zwei Rippen aufweisen, wobei die Rippe bzw. die Rippen pyramidenförmig mit einer mittig zwischen den Laschen liegenden Pyramidenspitze ausgebildet sein können.

Laschen, Kettenrad-Eingriffsteil und Zahnlücken-Reinigungssteg können zusammen einteilig ausgebildet sein. Das Kettenrad-Eingriffsteil kann aber auch aus einer Leiste und einer diese lösbar abdeckenden Verschleißkappe bestehen, wobei dann Laschen, Leiste und Zahnlücken-Reinigungssteg zusammen einteilig ausgebildet sind.

In einer abgewandelten Ausführungsform können die beiden Laschen zusammen mit dem Zahnlücken-Reinigungssteg einteilig ausgebildet sein, während das Kettenrad-Eingriffsteil eine Buchse ist, die lösbar in miteinander fluchtende Bohrungen der ersten Enden der Laschen eingepreßt ist.

Die Erfindung läßt sich also an Gleiskettenabschnitten realisieren, die über Kettenbolzen oder aber über Biegeelemente miteinander zu einer endlosen Kette verbunden werden.

In der Zeichnung sind einige als Beispiele dienende Ausführungsformen der Erfindung dargestellt. Es zeigen:

Figur 1     in Seitenansicht die rechte Seite eines
            Kettenfahrzeuges;

Figur 2     in Draufsicht ein Paar Gleiskettenabschnitte
            bei Lage im Untertrum einer Gleiskette;

Figur 3     die Darstellung gemäß Figur 2 in Seitenansicht;

Figur 4 und 5    in isometrischer Darstellung und gegenüber den Figuren 2 und 3 vergrößertem Maßstab
            zwei verschiedene Ausführungsformen für einen
            Zahnlücken-Reinigungssteg;

Figur 6     in schematischer Darstellung in Seitenansicht
            zwei benachbarte, von einem Kettenrad beaufschlagte Raupenglieder und

Figur 7     in Explosionsdarstellung eine abgewandelte
            Ausführungsform für einen Gleiskettenabschnitt.

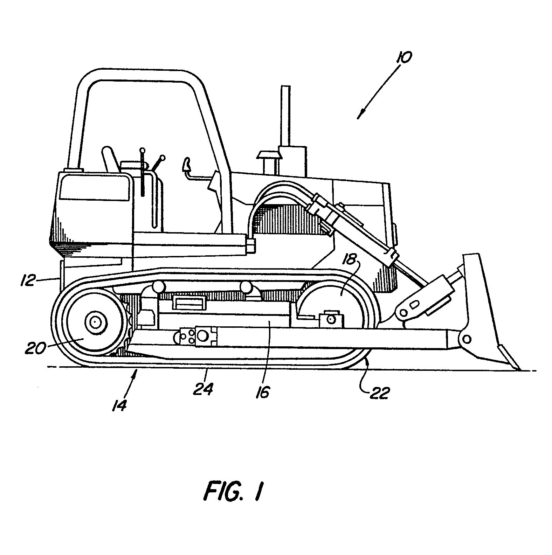

Figur 1 zeigt ein Kettenfahrzeug 10 mit einem Hauptrahmen 12, der sich auf Kettenanordnungen 14 abstützt, von denen lediglich die rechtsseitige dargestellt ist. Jede Kettenanordnung 14 umfaßt einen Kettenrahmen 16, der an seinem vorderen Ende ein verschiebbar angeordnetes Umlenkrad 18 trägt, um das eine endlose Gleiskette 20 geführt ist, die von einem am Rahmen 12 sitzenden Kettenrad 20 angetrieben wird. Der Untertrum 24 der Gleiskette 22 liegt auf dem Boden auf, wobei die nachfolgende Beschreibung davon ausgeht, daß sich die Gleiskettenabschnitte jeweils in diesem Untertrum 24 befinden.

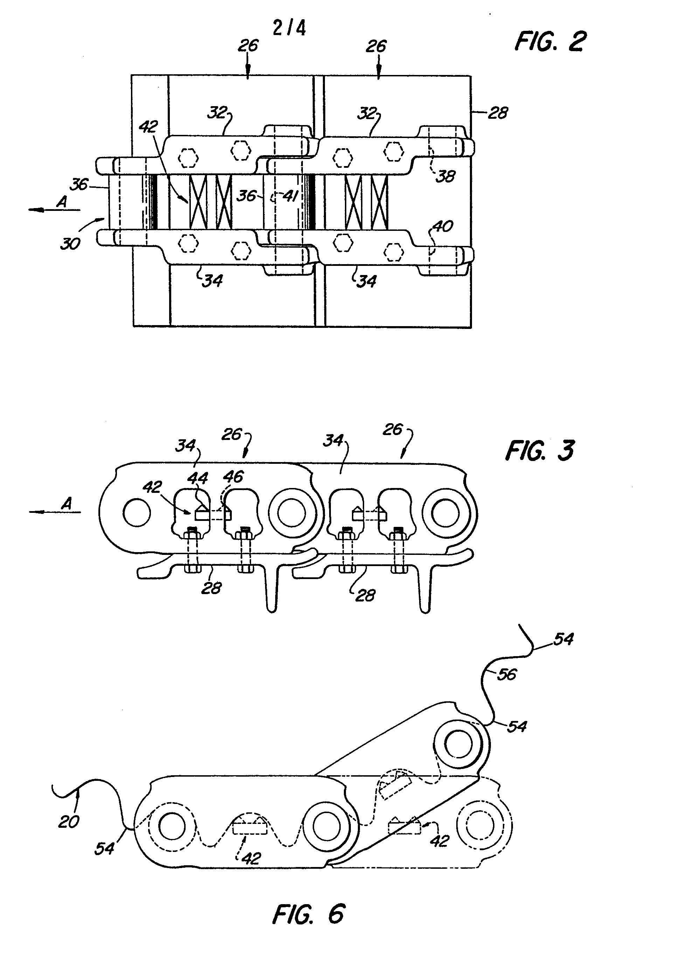

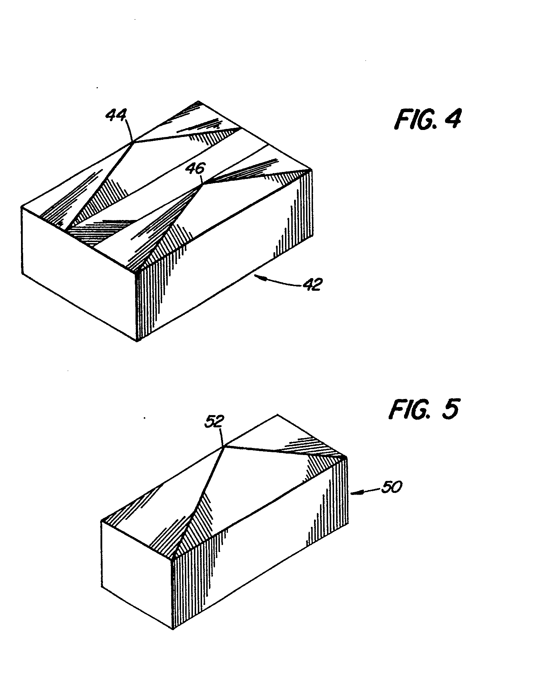

Gemäß den Figuren 2 und 3 besteht der dort dargestellte Gleiskettenabschnitt 26 aus einem Gleiskettenschuh 28, der lösbar an
einem Raupenglied 30 befestigt ist. Jedes Raupenglied 30 umfaßt
- gesehen in Vorwärts-Fahrtrichtung gemäß Pfeil A - eine rechte
und im seitlichen Abstand hiervon eine linke seitliche Lasche 32,
34, deren vorderen Enden miteinander fluchtende Bohrungen aufweisen, in die ein Kettenrad-Eingriffsteil 36 in Form einer zylindrischen Buchse eingepreßt ist. In einer Alternativlösung
kann das Kettenrad-Eingriffsteil 36 auch einteilig mit den
Laschen 32,34 ausgebildet sein. Die hinteren Enden der Laschen 32,34 weisen miteinander fluchtende Bohrungen 38,40 auf,
in die ein Kettenbolzen 41 gepreßt wird, nachdem das Kettenrad-
Eingriffsteil 36 des benachbarten Gleiskettenabschnitts in eine
gemeinsame Flucht mit den genannten Bohrungen gebracht worden
ist.

Die Laschen 32,34 sind ferner über einen einteilig mit ihnen ausgebildeten Zahnlücken-Reinigungssteg 42 miteinander verbunden,
der mittig zwischen den Drehachsen des Kettenrad-Eingriffsteils 36 sowie der Bolzenbohrungen 38,40 liegt. Die Oberseite des
Zahnlücken-Reinigungssteges 42 bildet ein Paar jeweils angenähert
pyramidenförmig ausgebildeter Rippen 44,46 , die jeweils in eine
mittig zwischen den Laschen 32,34 liegende Pyramidenspitze auslaufen (siehe insbesondere Figur 4).

Figur 5 zeigt für den Zahnlücken-Reinigungssteg 50 eine Alternativ-Lösung, bei der nur eine einzige, pyramidenförmig oder
meißelförmig ausgebildete Rippe 52 vorgesehen ist.

Figur 6 läßt ein Kettenrad 20 mit einer Vielzahl von Zähnen 54 erkennen, die zwischen sich jeweils eine Zahnlücke 56 zur Aufnahme
des Kettenrad-Eingriffsteils 36 jedes Raupengliedes 30 bilden.
Wenn die Gleiskette 22 um das Kettenrad 20 umläuft, gelangen aufeinanderfolgende Raupenglieder 30 in Eingriff mit dem Kettenrad, wobei ihre Kettenrad-Eingriffsteile 36 in Eingriff mit einer
ersten Zahnlücke 56 einschwenken und ihre Zahnlücken-Reinigungsstege 42 in die jeweils nachfolgende Zahnlücke eintauchen und
dabei etwaig in dieser Zahnlücke vorhandenes Material herausschaben. Dabei weist das Kettenrad 20 in üblicher Weise vorzugsweise eine ungerade Zähnezahl auf, so daß bei jeder Kettenradumdrehung die Kettenrad-Eingriffsteile 36 und somit auch die
Zahnlücken-Reinigungsstege 42 in die jeweils nächstfolgende Zahnlücke eingreifen. Dadurch wird jede Zahnlücke alle zwei Umdrehungen des Kettenrades gereinigt.

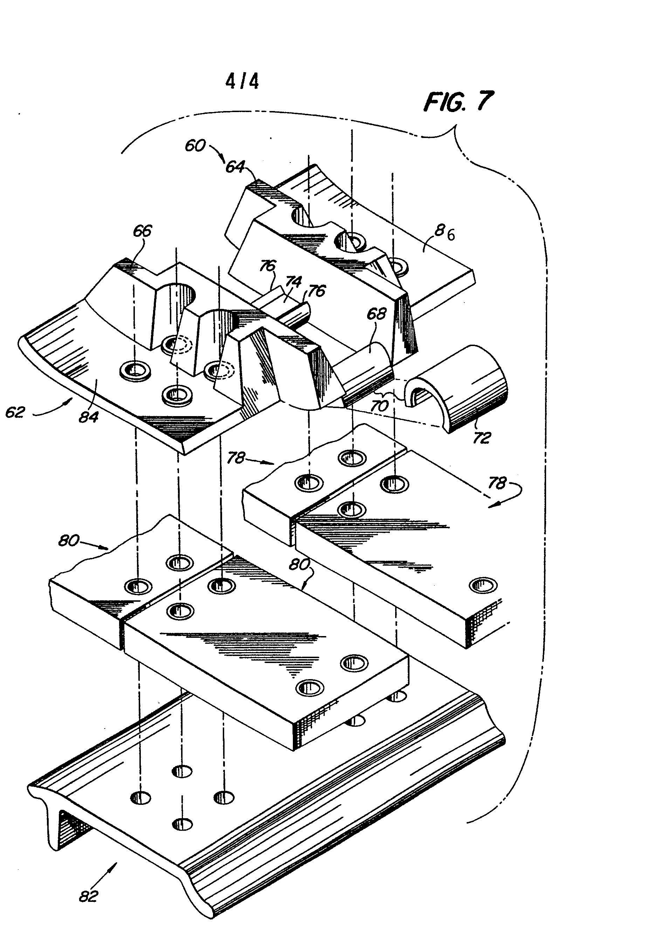

Figur 7 zeigt einen Gleiskettenabschnitt 60, der mit den benachbarten Gleiskettenabschnitten anstelle eines Kettenbolzens mit
biegeelastischen Elementen verbunden wird. Der dargestellte
Gleiskettenabschnitt 60 besteht aus einem Raupenglied 62 mit im
Abstand nebeneinander angeordneten rechten und linken Laschen 64,
66, die an ihren vorderen Enden über eine Leiste 68 eines Kettenrad-Eingriffsteils 70 verbunden sind, das noch eine lösbar auf
der Leiste 68 sitzende Verschleißkappe 72 aufweist. Außerdem sind
die beiden Laschen 64,66 noch über einen Zahnlücken-Reinigungssteg 74 miteinander verbunden, dessen Abstand von dem Kettenrad-
Eingriffsteil 70 der Zahnteilung des zugeordneten Kettenrades entspricht. Der Zahnlücken-Reinigungssteg 74 weist ein Paar quer
verlaufender, sich über die Steglänge erstreckender und nach oben
ragender Querrippen 76 auf.

Ferner weist der Gleiskettenabschnitt 60 ein rechtes und ein linkes Biegeelement 78,80 sowie einen Gleiskettenschuh 82 auf. Die
Laschen 64,66 sind mit flachen Montageteilen 86,84 versehen, die
zusammen mit dem Gleiskettenschuh 82 jeweils die Enden zweier
Biegeelementpaare lösbar einspannen.

Die Wirkungsweise des Zahnlücken-Reinigungssteges 74 ist ähnlich
der der vorstehend beschriebenen Ausführungsform. Jedoch wird die

Verschwenkung des Zahnlücken-Reinigungssteges 74 in die jeweilige Zahnlücke des Kettenrades durch Biegung der Biegeelemente 78,
80 bewirkt.

Gr/Gru.

# Patentanwälte GRAMM + LINS

Dipl.-Ing. Prof. Werner Gramm
Dipl.-Phys. Edgar Lins
**0085300**

D-3300 Braunschweig

DEERE & COMPANY

Moline, Illinois 61265

U S A

Telefon:        (05 31) 8 00 79
Telex:          09 52 620

Anwaltsakte 324-54 EP-1
Datum       5.Jan.1983

Patentansprüche:

1. Gleiskettenabschnitt (26; 60) einer endlosen Gleiskette (22) für ein Kettenfahrzeug (10), mit einem Raupenglied (30;62), das - in Draufsicht bei Lage im Untertrum (24) - eine rechte und im seitlichen Abstand hiervon eine linke Lasche (32, 34; 64,66) aufweist, deren ersten Enden über ein Kettenrad-Eingriffsteil (36;70) verbunden sind, das in seiner nach oben weisenden Fläche zylindrisch ausgebildet ist und zum Eingriff in Zahnlücken (56) bestimmt ist, die zwischen benachbarten Zähnen (54) eines Kettenrades (20) angeordnet und zumindest teilweise von diesen Zähnen gebildet sind, d a - d u r c h   g e k e n n z e i c h n e t, daß die Laschen (32,34; 64,66) ferner über einen Zahnlücken-Reinigungssteg (42;50;74) miteinander verbunden sind, der parallel zum Kettenrad-Eingriffsteil (36;70) und von diesem in einem der Zahnteilung des Kettenrades (20) entsprechenden Abstand angeordnet ist und zumindest eine nach oben ragende und sich nach oben verjüngende Rippe (44,46; 52;76) aufweist, die so ausgelegt ist, daß sie bei Beaufschlagung des Raupengliedes (30;62) durch das Kettenrad (20) deren Zahnlückenfläche dicht überstreicht.

- 2 -

2. Gleiskettenabschnitt nach Anspruch 1, dadurch gekennzeichnet, daß der Zahnlücken-Reinigungssteg (42;74) zwei Rippen(44,46; 76) aufweist.

3. Gleiskettenabschnitt nach Anspruch1 oder 2, dadurch gekennzeichnet, daß die Rippe (44,46;52) pyramidenförmig mit einer mittig zwischen den Laschen (32,34) liegenden Pyramidenspitze ausgebildet ist.

4. Gleiskettenabschnitt nach Anspruch 1, 2 oder 3, dadurch gekennzeichnet, daß Laschen (64,66), Kettenrad-Eingriffsteil (68) und Zahnlücken-Reinigungssteg (74) zusammen einteilig ausgebildet sind.

5. Gleiskettenabschnitt nach Anspruch 1, 2 oder 3, dadurch gekennzeichnet, daß das Kettenrad-Eingriffsteil (70) aus einer Leiste (68) und einer diese lösbar abdeckenden Verschleißkappe (72) besteht, wobei Laschen (64,66), Leiste (68) und Zahnlücken-Reinigungssteg (74) zusammen einteilig ausgebildet sind.

6. Gleiskettenabschnitt nach Anspruch 1, 2 oder 3, dadurch gekennzeichnet, daß die beiden Laschen (32,34) zusammen mit dem Zahnlücken-Reinigungssteg (42;50) einteilig ausgebildet sind, während das Kettenrad-Eingriffsteil (36) eine Buchse ist, die lösbar in miteinander fluchtende Bohrungen der ersten Enden der Laschen (32,34) eingepreßt ist.

Patentanwälte
Gramm + Lins
Gr/Gru.

0085300

1/4

FIG. 1

0085300

2/4

FIG. 2

FIG. 3

FIG. 6

FIG. 4

FIG. 5

0085300

FIG. 7